# EUROPÄISCHE PATENTSCHRIFT

(11) **EP 0 313 869 B1**
(45) Veröffentlichungstag und Bekanntmachung des Hinweises auf die Patenterteilung: **15.12.1993**
(21) Anmeldenummer: 88116304.2
(22) Anmeldetag: 01.10.1988
(51) Int. Cl.: G05D 23/19

(54) **Temperaturregelschaltung**
Temperature regulation circuit
Circuit de régulation de température

(30) Priorität: 29.10.1987 DE 3736659
(43) Veröffentlichungstag der Anmeldung: 03.05.1989
(73) Patentinhaber: TEMIC TELEFUNKEN microelectronic GmbH, 74072 Heilbronn (DE)
(72) Erfinder: Nutz, Karl-Diether, Dipl.-Ing., D-7101 Oedheim (DE)
(74) Vertreter: Maute, Hans-Jürgen, Dipl.-Ing.

(56) Entgegenhaltungen:
- GB-A- 2 066 520

## Beschreibung

Die Erfindung betrifft eine Temperaturregelschaltung zur Regelung der Temperatur einer Last, bei der eine der zu regelnden Temperatur entsprechende Spannung erzeugt und diese Spannung mit einer Sollwertspannung verglichen wird, der eine Rampenspannung überlagert ist.

Temperaturregelschaltungen finden auf vielen Gebieten der Technik Anwendung. Als Anwendungsbeispiel dient beispielsweise ein elektrischer Herd, der Herdplatten besitzt, die mittels elektrischer Schalter auf eine vorgegebene Temperatur gebracht werden, die für den jeweiligen Kochvorgang erforderlich ist. Die Einhaltung der gewünschten Temperatur muß überwacht werden. Dies geschieht bei elektrischen Herden durch Temperaturfühler, die unmittelbar an den Herdplatten oder im Bereich der Herdplatten angeordnet sind. Zur Erwärmung der Herdplatten erhalten deren Heizspiralen eine elektrische Leistung, die abgeschaltet oder reduziert wird, wenn die gewünschte Temperatur erreicht ist. Heizplatten haben jedoch eine thermische Trägheit, die zur Folge hat, daß die Temperatur der Heizplatte selbst dann noch steigt, wenn der Istwert der Temperatur den Temperatursollwert erreicht hat und die elektrische Leistung für die Heizplatte abgeschaltet ist. Die Temperatur der Heizplatte schwingt über den Sollwert hinaus, ein Vorgang der als Überschwingen bezeichnet wird. Das Temperatur-Überschwingen ist natürlich unerwünscht, da die angestrebte Temperatur natürlich nach Möglichkeit nicht überschritten werden soll.

Um das unerwünschte Überschwingen zu vermeiden, wird bei einem elektrischen Herd z. B. der der Soll-Temperatur der Heizplatte entsprechenden Spannung eine sägezahnförmige Rampenspannung überlagert. Entscheidenden Einfluß auf die Qualität der Regelung hat bei dieser Lösung die Amplitude und damit die Maximalauslenkung der überlagerten Rampenspannung. Bei der Methode mit der Rampenspannungsüberlagerung wird die Leistungszufuhr für die Last bereits bei Annäherung an den Sollwert abgeschaltet, und zwar dann, wenn die der Ist-Temperatur entsprechende Istwert-Spannung das erste Mal die der Soll-Temperatur entsprechende und damit der Rampenspannung überlagerte Sollwert-Spannung schneidet. Dadurch kann man einerseits den Überschwinger minimieren und andererseits der Regelung ein von außen vorgegebenes, maximales Schalthäufigkeitsverhalten aufzwingen.

Mit Hilfe der Wahl der Amplitude der der Sollwert-Spannung (Gerade) überlagerten Rampe kann zwar sehr gut der Überschwinger beseitigt werden, indem die Amplitude der Rampenspannung entsprechend groß gewählt wird, doch muß dabei in Kauf genommen werden, daß die Genauigkeit der Regelung, d. h. die Abweichung des Ist-Wertes vom vorgegebenen Sollwert, mit zunehmender Vergrößerung der Amplitude der Rampenspannung schlechter wird.

Aus GB-A-2 066 520 ist eine Temperaturregelschaltung bekannt, bei der die Sollwertspannung mit einer Dreieckspannung überlagert ist. Dabei ist vorgesehen die Amplitude der Dreieckspannung proportional zur gemessenen Temperaturänderungsrate zu steuern. Dreieckspannung, Temperaturänderungsrate und Temperaturvorwahl werden zu einem Sollwert verknüpft und mit der gemessenen Temperatur verglichen. Gemäß dem Ergebnis dieses Vergleichs wird die Stellgröße angesteuert. Diese bekannte Schaltungsanordnung enthält eine Vielzahl von Einzelkomponenten wie Differenzierer, Addierstufen, Differenzstufen und einen Dreieckspannungsgenerator, der eine Dreieckspannung variable Amplitude abgibt.

Aufgabe der Erfindung ist es, eine Temperaturregelschaltung nach dem Oberbegriff des Anspruchs 1 anzugeben, die anhand einfacher Einzelkomponenten eine Amplitudenanpaßung der Rampenspannung ermöglicht. Diese Aufgabe wird durch die kennzeichnenden Merkmale des Anspruchs 1 gelöst. Die vorteilhafte Ausgestaltung der Erfindung ergibt sich aus den Unteransprüchen.

Mit Hilfe der Temperaturregelschaltung nach der Erfindung wird die Amplitude der Rampenspannung von einem zunächst großen Wert (im Fangbereich) (automatisch) nach einer vorgegebenen Zeit zum Feinabgleich auf eine kleinere Amplitude umgeschaltet.

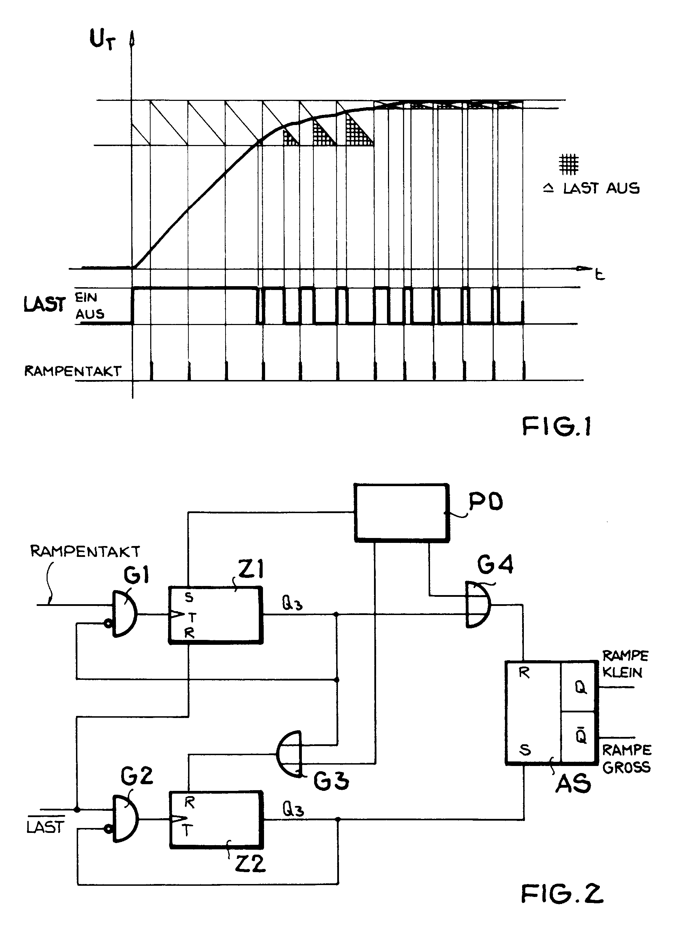

Die Figur 1 zeigt die Gerade der Sollwert-Spannung, die der Sollwert-Spannung überlagerte Rampenspannung sowie den Verlauf der Istwert-Spannung. Wie die Figur 1 zeigt, ist der Gerade der Sollwert-Spannung zunächst eine sägezahnförmige Rampenspannung mit großer Amplitude überlagert, und dann ist der Sollwert-Spannungs-Geraden eine ebenfalls sägezahnförmige Rampenspannung mit wesentlich kleinerer Amplitude überlagert. Unter diesem Diagramm ist das Laststeuersignal eingezeichnet, welches die Zündimpulse für das Leistungsbauelement (Triac) liefert. Wie die Laststeuersignal-Kurve zeigt, wird das Leistungsbauelement zunächst mit einem Dauertaktsignal angesteuert, da die Last je nach dem Einschalten möglichst schnell aufgeheizt werden soll. Dieser Dauertakt wird nach Figur 1 erst dann unterbrochen, wenn die Istwert-Spannung zum ersten Mal die Kurve der Rampenspannung schneidet. Im folgenden wird immer dann eine Impuls-Kette ausgelöst, wenn von der Istwert-Spannung die Anstiegsflanke der Rampenspannung geschnitten wird, während diese Impuls-Kette immer dann beendet wird, wenn die Istwert-Spannung die absteigende Flanke der Rampenspannung schneidet.

Die Figur 1 zeigt weiterhin ein Rampentaktsignal, welches immer dann erscheint, wenn die Anstiegsflanke der Rampenspannung auftritt. Auf die Bedeutung dieses Signals wird später noch eingegangen.

Die gewünschte Sollwert-Spannung wird beispielsweise dadurch erzeugt, daß ein Potentiometer zwischen eine Referenzspannung und eine Bezugsspannung geschaltet und die gewünschte Sollwert-Spannung am Potentiometer eingestellt wird. Der eingestellten Sollwert-Spannung wird die Rampenspannung überlagert und die resultierende Spannung einem Regler zugeführt. Die temperaturabhängige Spannung, die der Temperatur der Last entspricht, wird beispielsweise dadurch erzeugt, daß die Reihenschaltung eines Widerstandes mit einem temperaturabhängigen Widerstand (Temperaturfühler) zwischen eine Referenzspannung und den Bezugspunkt geschaltet wird. Die temperaturabhängige Spannung kann dann zwischen den beiden Widerständen abgenommen werden. Die temperaturabhängige Spannung wird ebenfalls dem Regler zugeführt, der seinerseits eine Triac-Ansteuerung ansteuert, die den Zündimpuls für den Triac liefert. Der Triac liegt in Reihe zur Last und die Reihenschaltung von Last und Triac liegt am Netz.

Die Erfindung wird im folgenden an einem Ausführungsbeispiel erläutert.

Die Figur 2 zeigt eine Schaltung zur Steuerung der Rampenspannung mit einer sogenannten Power-On-Logik PO, die die Aufgabe hat, dafür zu sorgen, daß die Elemente der Schaltung der Figur 1 die erforderlichen Betriebszustände (0 oder 1) auch schon dann erhalten, wenn die für die Logik erforderliche Betriebsspannung nach dem Einschalten der Schaltung noch nicht erreicht ist. Die Betriebsspannung baut sich nämlich langsam über einen Widerstand auf. Die Betriebsspannungsüberwachung PO schaltet jedoch aus, wenn die Betriebsspannung ihren Sollwert erreicht hat. Eine Power-On-Logik (PO) ist beispielsweise in der deutschen Patentschrift 27 15 609.8 beschrieben.

Die Schaltung der Figur 2 enthält weiterhin einen Amplitudenspeicher AS mit einem Q-Ausgang und einem Q̅-Ausgang. Erscheint am Q-Ausgang eine logische 1, so ist dies gleichbedeutend mit einer Rampenspannung kleiner Amplitude. Erscheint dagegen am Q̅-Ausgang des AS eine logische 1, so ist dies gleichbedeutend mit einer Rampenspannung großer Amplitude. Der Amplitudenspeicher AS besteht beispielsweise aus einem RS-Flipflop. Die Rampenspannung wird von einer dem AS nachgeschalteten Temperaturregelung, z. B. U 217 B erzeugt, der bei einer logischen 1 am Q-Ausgang ein Rampensignal mit kleiner Amplitude und bei einer logischen 0 am Q-Ausgang (logische 1 am Q̅-Ausgang) ein Rampensignal mit großer Amplitude liefert.

Hat die Betriebsspannungsüberwachung PO den Betriebs-Vorzustand der Logik (Schaltung der Figur 2) sichergestellt, so steht am Q-Ausgang des AS eine logische 0, weil der AS von der Betriebsspannungsüberwachung PO über das ODER-Gatter G4 ein Rücksetz-Signal (Reset) erhalten hat. Im Vorzustand der Logik wird der Zähler Z1 von der PO in den Zustand 1 und der Zähler Z2 ebenfalls von der PO in den Zustand 0 geschaltet. Das bedeutet, daß nach Wegfall des PO-Steuersignals (bei Erreichen der Betriebsspannung) der Q-Ausgang des Amplitudenspeichers AS zunächst im Zustand 0 verharrt, weil nach wie vor aufgrund des Ausgangszustandes des Zählers Z1 über das Gatter G4 ein Reset-Signal am Amplitudenspeicher AS anliegt. Da beim Einschalten der Last (z. B. Heizkörper) der der Temperatur der Last entsprechende Spannungs-Istwert kleiner als der angestrebte Sollwert ist, geschieht beim Einschalten eines als Last vorgesehenen Heizkörpers zunächst gar nichts, außer daß der Spannungs-Istwert infolge Zufuhr von Heizleistung mit zunehmender Zeit immer größer wird. Sobald jedoch gemäß der Figur 1 der Spannungs-Istwert das erste Mal das Sollwert-Rampensignal schneidet, wird die Heizleistung ausgeschaltet, bis der Spannungs-Istwert erneut das Sollwert-Rampensignal schneidet.

Jedes Mal, wenn die Last (Heizkörper) ausgeschaltet wird, erhält einerseits das Gatter G2 eine logische 1, während andererseits der Zähler Z1 durch jedes Last-Ausschalten zurückgesetzt wird. Dies bedeutet, daß der Zähler Z2 die Lastwechselsignale hochzählen kann. Im Ausführungsbeispiel der Figur 1 zählt der Zähler Z2 vier Lastwechseltakte. Mit dem 4. Lastwechseltakt schaltet der Zähler Z2 seinen Ausgang Q3 auf "1". Sobald am Ausgang Q3 des Zählers Z2 eine logische 1 steht, erhält der Amplitudenspeicher AS ein Set-Signal, wodurch die kleine Rampe in dem dem Amplitudenspeicher AS nachgeschalteten (nicht dargestellten) Regler aktiviert wird. Weil mit Q3 von Z2 gleich 1 gleichzeitig auch das Gatter G2 verriegelt wird, bleibt der Zähler Z2 so lange im Zustand 1, bis für eine Dauer von wiederum vier Rampentakten, die dem Gatter G1 zugeführt werden, Leistung aus der Regelung abgefordert wird, so daß das Laststeuersignal an G2 und am Reset-Eingang von Zähler Z1 Null ist. Dies kann aber gemäß der Figur 1 nur dann passieren, wenn infolge starker thermischer Belastung des Heizkörpers (z. B. starke Abkühlung) der der herrschenden Temperatur entsprechende Spannungs-Istwert stark unter den Minimalwert der nunmehr kleinen Rampenamplitude abgesunken ist. Auf diese Weise ist sichergestellt, daß in einem extremen Belastungsfall, der gleichbedeutend mit großer Leistungszufuhr ist, sofort wieder auf die große Rampe umgeschaltet wird, um das Entstehen eines Temperaturüberschwingers zu verhindern. Der Zähler Z1 ist beispielsweise ein RS-Takt-Flipflop und der Zähler Z2 ist beispielsweise ein R-Takt-Flipflop.

## Patentansprüche

1. Temperaturregelschaltung zur Regelung der Temperatur einer Last, bei der eine der zu regelnden Temperatur entsprechende Spannung erzeugt und diese Spannung mit einer Sollwert-Spannung verglichen wird, der eine sägezahnformige Rampenspannung überlagert ist und bei der eine Amplitudensteuer-Schaltung vorgesehen ist, die die Amplitude der Rampenspannung zunächst konstant hält und bei Annäherung der Temperatur-Spannung an die Sollwert-Spannung verkleinert, dadurch gekennzeichnet, daß der Amplitudensteuer-Schaltung ein Rampentaktsignal und ein Laststeuersignal (LAST) zugeführt werden, daß sie zwei Zähler (Z1, Z2) sowie ein RS-Flipflop als Amplitudenspeicher (AS) aufweist, daß der Reset-Eingang des Flipflops (AS) vom ersten Zähler (Z1) und der Set-Eingang des Flipflops (AS) vom zweiten Zähler (Z2) angesteuert wird, daß die Amplitude der Rampenspannung entsprechend den Signalen an den Ausgängen (Q,Q) des RS-Flipflops (AS) derart gesteuert wird, daß die Rampenspannungsamplitude groß wird, wenn während einer bestimmten Anzahl von Rampentaktsignalen, die vom ersten Zähler (Z1) gezählt werden, kein Laststeuersignal (LAST) auftritt und daß die Rampenspannungsamplitude klein wird, wenn eine bestimmte Anzahl von Laststeuersignalen (LAST) vom Zähler Z2 gezählt wurde, die nicht von der bestimmten Anzahl von Rampentaktsignalen ohne Laststeuersignal (LAST) unterbrochen wurden.

2. Temperaturregelschaltung nach Anspruch 1, dadurch gekennzeichnet, daß der erste Zähler (Z1) ein RS-Takt-Flipflop und der zweite Zähler (Z2) ein R-Takt-Flipflop ist.

3. Temperaturregelschaltung nach Anspruch 1 oder 2, dadurch gekennzeichnet, daß der erste Zähler (Z1) von einem Rampentaktsignal, welches mit jeder Anstiegsflanke der Rampenspannung auftritt, sowie vom Laststeuersignal angesteuert wird, welches ein Leistungsbauelement steuert.

4. Temperaturregelschaltung nach Anspruch 3, dadurch gekennzeichnet, daß das Rampentaktsignal das Taktsignal für den ersten Zähler (Z1) und das Laststeuersignal das Reset-Signal für den ersten Zähler (Z1) ist.

5. Temperaturregelschaltung nach Anspruch 3 oder 4, dadurch gekennzeichnet, daß das Laststeuersignal das Taktsignal für den zweiten Zähler (Z2) ist.

6. Temperaturregelschaltung nach einem der Ansprüche 3 bis 5, dadurch gekennzeichnet, daß dem ersten Zähler (Z1) ein erstes UND-Gatter (G1) vorgeschaltet ist, welches das Rampentaktsignal sowie das Ausgangssignal des ersten Zählers (Z1) erhält.

7. Temperaturregelschaltung nach einem der Ansprüche 3 bis 6, dadurch gekennzeichnet, daß dem zweiten Zähler (Z2) ein zweites UND-Gatter (G2) vorgeschaltet ist und daß dem zweiten UND-Gatter (G2) das Laststeuersignal sowie das Ausgangssignal des zweiten Zählers (Z2) zugeführt wird.

8. Temperaturregelschaltung nach einem der Ansprüche 1 bis 7, dadurch gekennzeichnet, daß eine Power-On-Logik (PO) vorgesehen ist, die vor Erreichung der Betriebsspannung für die bis dahin erforderlichen Logikzustände sorgt.

9. Temperaturregelschaltung nach Anspruch 8, dadurch gekennzeichnet, daß ein erstes ODER-Gatter (G3) vorgesehen ist, welches von der Power-On-Logik (PO) sowie vom Ausgang des ersten Zählers (Z1) angesteuert wird und welches das Reset-Signal für den zweiten Zähler (Z2) liefert.

10. Temperaturregelschaltung nach Anspruch 8 oder 9, dadurch gekennzeichnet, daß ein zweites ODER-Gatter (G4) vorgesehen ist, welches von der Power-On-Logik (PO) sowie vom Ausgang des ersten Zählers (Z1) angesteuert wird und welches das Reset-Signal für den Amplitudenspeicher (AS) liefert.

## Claims

1. Temperature control circuit for controlling the temperature of a load wherein a voltage corresponding to the temperature to be controlled is generated and said voltage is compared to a setpoint voltage on which a saw-tooth ramp voltage is superimposed, and wherein an amplitude control circuit is provided which initially keeps the amplitude of the ramp voltage constant and then reduces it when the temperature voltage approaches the setpoint voltage, characterized in that a ramp clock pulse and a load control signal (LAST) are supplied to the amplitude control circuit, that said circuit has two counters (Z1, Z2) as well as an RS flipflop as an amplitude store (AS), that the reset input of the flipflop (AS) is controlled by the first counter (Z1) and the set input of the flipflop (AS) is controlled by the second counter (Z2), that the amplitude of the ramp voltage is controlled according to the signals at the outputs (Q, Q̅) of the RS flipflop (AS) in such a way that the ramp voltage amplitude becomes high when, during a specific number of ramp clock pulses which are counted by the first counter (Z1), no load control signal (LAST) occurs and the ramp voltage amplitude becomes low when a specific number of load control signals (LAST) have been counted by the counter Z2 and have not been interrupted by the specific number of ramp clock pulses without a load control signal (LAST).

2. Temperature control circuit according to claim 1, characterized in that the first counter (Z1) is a clocked RS flipflop and the second counter (Z2) is a clocked R flipflop.

3. Temperature control circuit according to claim 1 or 2, characterized in that the first counter (Z1) is activated by a ramp clock pulse occurring at each rising edge of the ramp voltage, as well as by the load control signal which controls a power component.

4. Temperature control circuit according to claim 3, characterized in that the ramp clock pulse is the clock pulse for the first counter (Z1) and the load control signal is the reset signal for the first counter (Z1).

5. Temperature control circuit according to claim 3 or 4, characterized in that the load control signal is the clock pulse for the second counter (Z2).

6. Temperature control circuit according to one of claims 3 to 5, characterized in that connected upstream of the first counter (Z1) is a first AND gate (G1) which receives the ramp clock pulse and the output signal of the first counter (Z1).

7. Temperature control circuit according to one of claims 3 to 6, characterized in that a second AND gate (G2) is connected upstream of the second counter (Z2) and that the load control signal and the output signal of the second counter (Z2) are supplied to the second AND gate (G2).

8. Temperature control circuit according to one of claims 1 to 7, characterized in that a power-on logic (PO) is provided which ensures the logical states required in the period up to attainment of the operating voltage.

9. Temperature control circuit according to claim 8, characterized in that a first OR gate (G3) is provided, which is activated by the power-on logic (PO) and by the output of the first counter (Z1) and which supplies the reset signal for the second counter (Z2).

10. Temperature control circuit according to claim 8 or 9, characterized in that a second OR gate (G4) is provided, which is activated by the power-on logic (PO) and by the output of the first counter (Z1) and which supplies the reset signal for the amplitude store (AS).

## Revendications

1. Circuit de régulation de la température pour réguler la température d'une charge, dans le cas duquel on produit une tension correspondant à la température à réguler et on compare cette tension avec une tension de valeur prescrite à laquelle se superpose une tension de rampe en forme de dents de scie et dans le cas duquel est prévu un circuit de commande de l'amplitude qui tout d'abord maintient constante l'amplitude de la tension de rampe puis, lorsque la tension de la température s'approche de la tension de la valeur prescrite, réduit cette amplitude, circuit caractérisé par le fait qu'au circuit de commande de l'amplitude on amène un signal d'horloge de rampe et un signal de commande de charge (LAST), par le fait qu'il présente deux compteurs (Z1, Z2) ainsi qu'une bascule RS comme mémoire d'amplitude (AS), par le fait que l'entrée de retour à l'état initial de la bascule (AS) est commandée par le premier compteur (Z1) et l'entrée de mise en route de la bascule (AS), par le second compteur (Z2), par le fait que l'amplitude de la tension de rampe est commandée, en fonction des signaux apparaissant aux sorties (Q, Q̅) de la bascule RS (AS) de façon telle que l'amplitude de la tension de rampe soit la grande amplitude lorsque, pendant un nombre déterminé de signaux d'horloge de rampe, comptés par le premier compteur (Z1), aucun signal de commande de charge (LAST) n'apparaît et de façon telle que l'amplitude de la tension de rampe soit la petite amplitude lorsque le compteur Z2 a compté un nombre déterminé de signaux de commande de charge (LAST), nombre qui n'a pas été interrompu par le nombre déterminé de signaux d'horloge de rampe apparus en l'absence du signal de commande de charge (LAST).

2. Circuit de régulation de la température selon la revendication 1, caractérisé par le fait que le premier compteur (Z1) est une bascule RS et que le second compteur (Z2) est une bascule R.

3. Circuit de régulation de la température selon la revendication 1 ou 2, caractérisé par le fait que le premier compteur (Z1) est mis en route par un signal d'horloge de rampe, qui apparaît avec chaque flanc croissant de la tension de rampe, ainsi que par le signal de commande de charge, qui commande un composant de puissance.

4. Circuit de régulation de la température selon la revendication 3, caractérisé par le fait que le signal d'horloge de rampe constitue le signal d'horloge pour le premier compteur (Z1) et que le signal de commande de charge constitue le signal de retour à l'état initiàl pour le premier compteur (Z1).

5. Circuit de régulation de la température selon la revendication 3 ou 4, caractérisé par le fait que le signal de commande de charge constitue le signal d'horloge pour le second compteur (Z2).

6. Circuit de régulation de la température selon l'une des revendications 3 à 5, caractérisé par le fait qu'en amont du premier compteur (Z1) est connectée une première porte ET (G1) qui reçoit le signal d'horloge de rampe ainsi que le signal de sortie du premier compteur (Z1).

7. Circuit de régulation de la température selon l'une des revendications 3 à 6, caractérisé par le fait qu'en amont du second compteur (Z2) est connectée une seconde porte ET (Z2) et par le fait qu'à la seconde porte ET (G2) on amène le signal de commande de charge ainsi que le signal de sortie du second compteur (Z2).

8. Circuit de régulation de la température selon l'une des revendications 1 à 7, caractérisé par le fait qu'est prévu un circuit logique de mise en route (PO) qui, avant que soit atteinte la tension d'exploitation, assure les états logiques nécessaires jusque là.

9. Circuit de régulation de la température selon la revendication 8, caractérisé par le fait qu'est prévue une première porte OU (G3) qui est commandée par le circuit logique de mise en route (PO) ainsi que par le signal de sortie du premier compteur (Z1) et qui fournit le signal de retour à l'état initial pour le second compteur (Z2).

10. Circuit de régulation de la température selon la revendication 8 ou 9, caractérisé par le fait qu'est prévue une seconde porte OU (G4) qui est commandée par le circuit logique de mise en route (PO) ainsi que par le signal de sortie du premier compteur (Z1) et qui fournit le signal de retour à l'état initial pour la mémoire d'amplitude (AS).
